(19) **Europäisches Patentamt / European Patent Office / Office européen des brevets**

(11) **EP 4 201 702 B1**

(12) # EUROPEAN PATENT SPECIFICATION

(45) Date of publication and mention
of the grant of the patent:
**13.11.2024 Bulletin 2024/46**

(21) Application number: **22197301.9**

(22) Date of filing: **23.09.2022**

(51) International Patent Classification (IPC):
**B60C 9/00** *(2006.01)*     **D02G 3/48** *(2006.01)*
**B60C 9/20** *(2006.01)*     **D07B 1/06** *(2006.01)*

(52) Cooperative Patent Classification (CPC):
(C-Sets available)
**D07B 1/062;** B60C 9/0057; B60C 2009/0092;
B60C 2009/2074; D07B 1/0626; D07B 2201/2003;
D07B 2201/2018; D07B 2201/2023;
D07B 2201/2048; D07B 2201/2059; D07B 2201/206

(Cont.)

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.12.2021 JP 2021209801**

(43) Date of publication of application:
**28.06.2023 Bulletin 2023/26**

(73) Proprietor: **Sumitomo Rubber Industries, Ltd.
Kobe-shi, Hyogo 651-0072 (JP)**

(72) Inventor: **YAMAGUCHI, Eiji
Kobe-shi, 651-0072 (JP)**

(74) Representative: **TBK
Bavariaring 4-6
80336 München (DE)**

(56) References cited:
**EP-B1- 0 918 654     JP-A- 2001 234 486
JP-A- H05 238 202     JP-B2- 3 276 612
JP-B2- 3 391 568     US-B2- 9 610 806**

(52) Cooperative Patent Classification (CPC): (Cont.)

C-Sets
D07B 2201/2003, D07B 2801/14;
D07B 2201/2048, D07B 2801/12;
D07B 2201/2059, D07B 2801/12;
D07B 2201/206, D07B 2801/12

**Description**

BACKGROUND OF THE INVENTION

Field of the Invention

The present invention relates to a tire including a belt layer. A prior art tire is known from document JP 3 276612 B2. This document discloses the features of the preamble of claim 1.

Background Art

Conventionally, a tire including a belt layer is known. For example, Japanese Laid-Open Patent Publication No. 2015-171864 describes a heavy duty pneumatic tire including a belt that has a ply including cords each having a single-strand structure.

However, in recent years, there has been strong demand for low fuel consumption performance, and there is a concern that ride comfort or durability may be reduced when weight reduction, which contributes significantly to improvement of low fuel consumption performance, is achieved.

The present invention has been made in view of the above circumstances, and the object of the present invention is to provide a tire that can have improved combined performance of ride comfort and durability.

The object of the invention is achieved by a tire according to claim 1. Advantageous embodiments are carried out according to the dependent claims.

SUMMARY OF THE INVENTION

The present invention is directed to a tire including a belt layer, wherein the belt layer includes at least one belt ply in which belt cords are arranged, the belt cords each have an N + M structure including N core(s) and M sheaths, each core has a cross-section having a flattened shape having a long diameter d1 and a short diameter d2, and a value (d2/d1/L1) obtained by dividing a flatness ratio d2/d1 of the core by a shortest distance L1 (mm) in a tire radial direction from a ground-contact surface of a tread portion to a center of the belt cord in a tire meridian cross-section is not greater than 0.07 (1/mm).

By having the above-described configuration, the tire of the present invention can have improved combined performance of ride comfort and durability.

BRIEF DESCRIPTION OF THE DRAWINGS

    FIG. 1 is a cross-sectional view showing a tire of an embodiment of the invention;
    FIG. 2 is an enlarged cross-sectional view of a tread portion of the embodiment of the invention;
    FIG. 3 is a schematic cross-sectional view of a belt cord;
    FIG. 4 is an enlarged view of a core in FIG. 3;
    FIG. 5 is a schematic cross-sectional view of a belt ply;
    FIG. 6 is a schematic cross-sectional view of a belt cord of another embodiment of the invention; and
    FIG. 7 is a schematic cross-sectional view of a belt ply of another embodiment of the invention.

DETAILED DESCRIPTION

Hereinafter, an embodiment of the present invention will be described in detail with reference to the drawings.

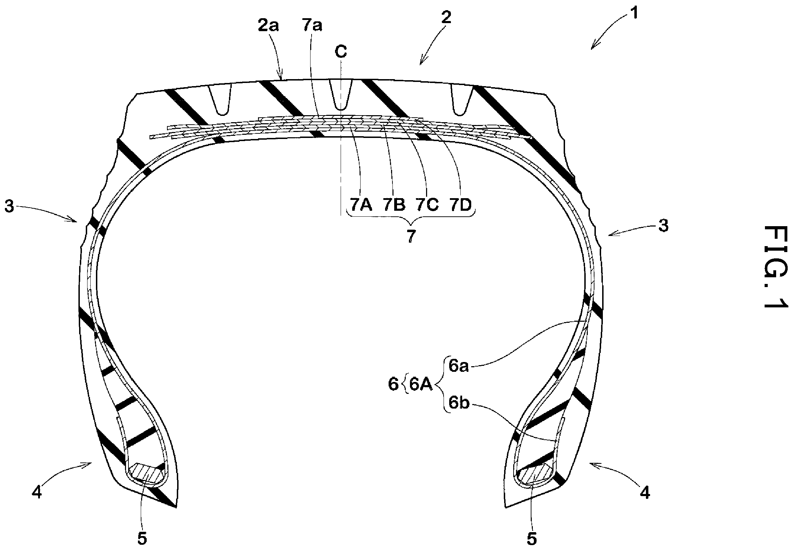

FIG. 1 shows a tire meridian cross-sectional view of a tire 1 of the present embodiment of the invention in a normal state, including the rotation axis of the tire 1. Here, in the case where the tire 1 is a pneumatic tire, the "normal state" is a state where: the tire 1 is fitted on a normal rim and adjusted to a normal internal pressure; and no load is applied to the tire 1. Hereinafter, unless otherwise specified, dimensions and the like of components of the tire 1 are values measured in the normal state.

The "normal rim" is a rim that is defined, in a standard system including a standard on which the tire 1 is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire 1 is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

As shown in FIG. 1, the tire 1 is suitably used, for example, as a heavy duty tire used for a truck or a bus. The tire 1 is not specified as a heavy duty tire, and can be applied to various tires including, for example, pneumatic tires such as a tire for a passenger car, a tire for a motorcycle, and a tire for racing, a non-pneumatic tire the interior of which is not filled with pressurized air, etc.

The tire 1 of the present embodiment of the invention includes a tread portion 2 annularly extending, a pair of sidewall portions 3 extending on both sides of the tread portion 2, and a pair of bead portions 4 extending so as to be connected to the sidewall portions 3. The tire 1 also includes, for example, a toroidal carcass 6 extending on and between bead cores 5 of the pair of bead portions 4, and a belt layer 7 disposed outward of the carcass 6 in the tire radial direction and inward of the tread portion 2 in the tire radial direction.

The carcass 6 is composed of, for example, one carcass ply 6A. The carcass ply 6A includes carcass cords and a topping rubber covering the carcass cords. The carcass cords are, for example, arranged so as to be tilted at an angle of 75 to 90° with respect to the tire circumferential direction. Here, in the present specification, "A to B" indicates "not less than A and not greater than B".

As each carcass cord, for example, a steel cord or a cord made of an organic fiber such as nylon, polyester, or rayon is suitably used. Among them, in the case where the tire 1 is used as a heavy duty tire, a steel cord is preferably used as each carcass cord. The carcass 6 may be composed of, for example, two or more carcass plies 6A.

The carcass ply 6A includes, for example, a body portion 6a and turned-up portions 6b. The body portion 6a preferably extends from the tread portion 2 through each sidewall portion 3 to the bead core 5 of each bead portion 4. Each turned-up portion 6b, for example, is connected to the body portion 6a, is turned up around the bead core 5 from the inner side to the outer side in the tire axial direction, and extends outward in the tire radial direction. For the carcass ply 6A, for example, a so-called ultra-highly turned-up structure in which an end portion of each turned-up portion 6b extends to between the body portion 6a and the belt layer 7 may be employed.

The belt layer 7 includes at least one belt ply. In the present embodiment of the invention, the belt layer 7 includes four belt plies 7A, 7B, 7C, and 7D. The belt layer 7 preferably includes two or more belt plies 7A, 7B, 7C, and 7D adjacent to each other in the tire radial direction. The multiple belt plies 7A, 7B, 7C, and 7D of such a belt layer 7 cooperate to improve the stiffness of the tread portion 2, and serve to improve the durability of the tire 1.

The belt plies 7A, 7B, 7C, and 7D preferably have the same configuration. Such belt plies 7A, 7B, 7C, and 7D can be produced and managed as one belt ply 7a, so that the production cost can be reduced. The belt plies 7A, 7B, 7C, and 7D may have different configurations, for example.

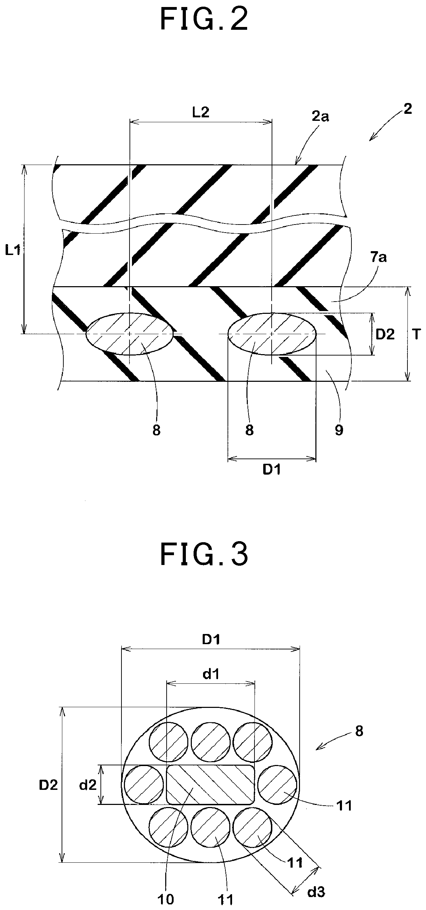

FIG. 2 is an enlarged cross-sectional view, of the tread portion 2, orthogonal to the longitudinal direction of belt cords 8. As shown in FIG. 2, the belt ply 7a includes, for example, belt cords 8 arranged so as to be tilted relative to the tire circumferential direction, and a covering layer 9 covering the belt cords 8. Each belt cord 8 is preferably arranged so as to be tilted at an angle of 10 to 45° with respect to the tire circumferential direction.

In the case where the belt plies 7A, 7B, 7C, and 7D have the same configuration, the same belt cords 8 and the same covering layer 9 are preferably included. On the other hand, in the case where the belt plies 7A, 7B, 7C, and 7D have different configurations, for example, at least either the belt cords 8 or the covering layer 9 is different.

FIG. 3 is a schematic cross-sectional view, of the belt cord 8, orthogonal to the longitudinal direction of the belt cord 8. As shown in FIG. 3, each belt cord 8 of the present embodiment of the invention has an N + M structure including N cores 10 and M sheaths 11. FIG. 3 shows a 1 + 8 structure including one core 10 and eight sheaths 11. Such a belt cord 8 can exhibit high stiffness and serves to improve the durability of the tire 1.

Each sheath 11 may be, for example, a monofilament cord composed of a single filament, or a cord obtained by twisting a plurality of filaments together. In addition, as each sheath 11, for example, a cord composed of a single filament and a cord obtained by twisting a plurality of filaments together may be combined and used.

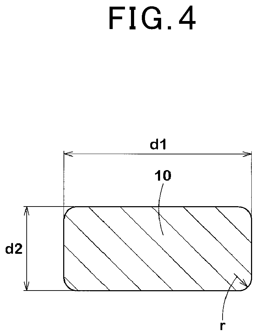

FIG. 4 is an enlarged view of the core 10 in FIG. 3. As shown in FIG. 3 and FIG. 4, the core 10 of the present embodiment of the invention has a cross-section having a flattened shape having a long diameter d1 and a short diameter d2. The core 10 has, for example, a substantially rectangular cross-section. Such a core 10 can flatten the entire belt cord 8 and can moderately alleviate the stiffness in the short diameter direction of the belt cord 8, thereby improving the ride comfort of the tire 1. The cross-sectional shape of the core 10 is not limited to such a mode, and may be, for example, an elliptical shape or a polygonal shape such as a hexagonal shape, as long as the cross-sectional shape is a flattened shape.

The core 10 may be, for example, a monofilament cord composed of a single filament, or a cord obtained by twisting a plurality of filaments together. As the core 10, a monofilament cord is preferably used from the viewpoint of improving combined performance of ride comfort and durability.

The long diameter d1 and the short diameter d2 of the core 10 are the largest straight line and the smallest straight line, respectively, among straight lines that pass through the center of a cross-section of the core cord and intersect the contour of the core cord. These axes can be obtained by performing measurement with calipers or the like being applied to the core 10, taken out from the belt cord 8, in a direction perpendicular to the longitudinal direction of the core 10.

As shown in FIG. 2 and FIG. 3, in the present embodiment of the invention, a value (d2/d1/L1) obtained by dividing a flatness ratio d2/d1 of the core 10 by a shortest distance L1 (mm) in the tire radial direction from a ground-contact surface 2a of the tread portion 2 to the center of the belt cord 8 in a tire meridian cross-section is not greater than 0.07 (1/mm).

In such a tread portion 2, when the shortest distance L1 is smaller, the flatness ratio d2/d1 of the core 10 also becomes smaller, so that the stiffness in the short diameter direction of the belt cord 8 can be reduced. Accordingly, the tread portion 2 can improve followability to a road surface, so that the ride comfort of the tire 1 can be improved. In addition, such a tread portion 2 can also cause flexible movement in response to stretch of the sheaths 11 arranged around the core 10, so that the combined performance of the ride comfort and the durability of the tire 1 can be improved.

Here, the shortest distance L1 in the tire radial direction from the ground-contact surface 2a to the center of the belt cord 8 is the shortest distance from the outermost surface in the tire radial direction on a tire equator C to the center of the belt cord 8 of the belt ply 7a on the outermost side in the tire radial direction.

The outermost surface in the tire radial direction on the tire equator C in the case where a groove is formed on the tire equator C is defined as the point of intersection of the tire equator C and a straight line connecting the outermost edges in the tire radial direction of both side walls of the groove on the tire equator C. In addition, the center of the belt cord 8 in the case where no belt cord 8 is present on the tire equator C is defined as the point of intersection of the tire equator C and a straight line connecting the centers of a pair of the belt cords 8 adjacent to the tire equator C.

The shortest distance L1 is preferably a value measured in the normal state as described above, and can be obtained, for example, by a computer tomography method using X-rays. The shortest distance L1 may be measured, for example, in a simplified manner with the bead portions 4 in a cross-section portion cut out from a part of the tire 1 along a tire meridian, being matched with the width of the normal rim.

Such a belt cord 8 can be easily stretched by increasing the length of each sheath 11 relative to the core 10, and flexibly follows deformation, so that the durability of the tire 1 can be improved. Therefore, the tire 1 of the present embodiment of the invention can have improved combined performance of ride comfort and durability.

From such a viewpoint, the value (d2/d1/L1) is more preferably not greater than 0.065 (1/mm) and further preferably not greater than 0.05 (1/mm). The lower limit of the value (d2/d1/L1) is not particularly limited, but the value (d2/d1/L1) is preferably not less than 0.01 (1/mm), more preferably not less than 0.02 (1/mm), and further preferably not less than 0.03 (1/mm).

As a more preferable mode, examples of the covering layer 9 of the belt ply 7a include a rubber composition and a thermoplastic elastomer composition. As the covering layer 9, a rubber composition is preferably used from the viewpoint of forming a chemical network and firmly adhering the belt cord 8 and the covering layer 9. As the covering layer 9, a thermoplastic elastomer composition is preferably used from the viewpoint of recyclability.

In the case where the covering layer 9 is a rubber composition, examples of the rubber component include isoprene-based rubbers, butadiene-based rubbers, styrene-butadiene rubber, and chloroprene rubber. From the viewpoint of the adhesion to the belt cord 8, the covering layer 9 preferably contains an isoprene-based rubber. Examples of the isoprene-based rubber include natural rubber and synthetic isoprene rubber.

The rubber composition of the covering layer 9 may contain a reinforcing filler, for example. Examples of the filler include carbon black, silica, calcium carbonate, talc, alumina, clay, aluminum hydroxide, and mica.

From the viewpoint of durability, the amount of the filler per 100 parts by mass of the rubber component is preferably not less than 30 parts by mass. On the other hand, from the viewpoint of heat generation properties, as for the upper limit of the amount of the filler, the amount of the filler is preferably not greater than 65 parts by mass.

The rubber composition of the covering layer 9 preferably contains carbon black among the fillers. From the viewpoint of durability, the amount of the carbon black per 100 parts by mass of the rubber component is preferably not less than 10 parts by mass. On the other hand, from the viewpoint of heat generation properties, as for the upper limit of the amount of the carbon black, the amount of the carbon black is preferably not greater than 65 parts by mass.

The carbon black is not particularly limited, and examples of the carbon black include: furnace black (furnace carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; channel black (channel carbon black) such as EPC, MPC, and CC; and graphite. One of these carbon blacks may be used alone, or two or more of these carbon blacks may be used in combination.

The rubber composition of the covering layer 9 may contain a plasticizer, for example. Examples of the plasticizer include oils and resin components. The amount of the plasticizer per 100 parts by mass of the rubber component is preferably greater than 0.5 parts by mass and less than 10 parts by mass.

From the viewpoint of adhesion, the rubber composition of the covering layer 9 may contain cobalt element in the rubber, for example. Examples of compounds containing cobalt element include organic acid cobalt salts such as cobalt stearate, cobalt naphthenate, cobalt neodecanoate, and cobalt boron neodecanoate.

From the viewpoint of adhesion, the rubber composition of the covering layer 9 may contain a curable resin component, for example. Examples of the curable resin component include modified resorcinol resins and modified phenol resins. The amount of the curable resin component per 100 parts by mass of the rubber component is preferably not less than 1 part by mass and more preferably not less than 2 parts by mass. On the other hand, as for the upper limit of the amount of the curable resin component, the amount of the curable resin component is preferably not greater than 10 parts by mass and more preferably not greater than 8 parts by mass.

In the case where the rubber composition of the covering layer 9 contains a curable resin component, the rubber composition preferably also contains a resin curing agent. Examples of the resin curing agent include methylene donors such as hexamethylenetetramine (HMT), hexamethoxy methylol melamine (HMMM), and hexamethylol melamine pentamethyl ether (HMMPME). The amount of the resin curing agent per 100 parts by mass of the curable resin component is preferably not less than 5 parts by mass.

The rubber composition of the covering layer 9 may contain, for example, an antioxidant, zinc oxide, sulfur, a vulcanization accelerator, a crosslinking agent, etc., as other components.

From the viewpoint of adhesion to the covering layer 9, the surface of the belt cord 8 is preferably plated. Examples of the type of the plating layer include a plating layer of two elements using copper and zinc and a plating layer of three elements using copper, zinc, and cobalt. By forming a plating layer of three elements on the belt cord 8, the belt cord 8 can have further improved adhesion to the covering layer 9.

In a cross-section orthogonal to the longitudinal direction of the belt cords 8, an inter-center distance L2 between a pair of the belt cords 8 adjacent to each other in the width direction of the belt ply 7a is preferably not greater than 170% of a long diameter D1 of the belt cord 8. Such a belt ply 7a can increase the in-plane stiffness and suppress occurrence of belt looseness, so that the durability of the tire 1 can be improved.

Here, the inter-center distance L2 between the belt cords 8 is obtained as the average of the inter-center distances L2 between the five belt cords 8 on each of both sides in the tire axial direction of the tire equator C. The inter-center distance L2 in the case where the belt cord 8 is present on the tire equator C is preferably obtained as the average of the inter-center distances L2 between a total of eleven belt cords 8 including the belt cord 8 on the tire equator C and the five belt cords 8 on each of both sides.

The inter-center distance L2 is preferably a value measured in the normal state as described above, and can be obtained, for example, by a computer tomography method using X-rays. The inter-center distance L2 may be measured, for example, in a simplified manner with the bead portions 4 in a cross-section portion cut out from a part of the tire 1 along a tire meridian, being matched with the width of the normal rim.

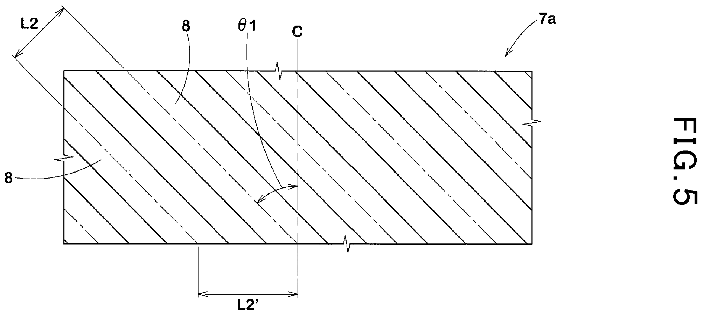

FIG. 5 is a schematic cross-sectional view of the belt ply 7a. As shown in FIG. 5, the inter-center distance L2 between the belt cords 8 in the case where the belt cords 8 are arranged so as to be tilted at an angle $\theta 1$ with respect to the tire circumferential direction can be obtained on the basis of the following equation (1) from an inter-center distance L2' between the belt cords 8 in a tire meridian cross-section.

$$L2 = L2\text{'}\cos\theta 1 \qquad (1)$$

As shown in FIG. 2, a thickness T of the belt ply 7a is preferably 160% to 200% of a short diameter D2 of the belt cord 8. In such a belt ply 7a, since sufficient covering with the covering layer 9 is achieved, a holding force by the belt ply 7a can be exerted while allowing stretch of the sheaths 11, so that the ride comfort and the durability of the tire 1 can be improved.

Here, the thickness T of the belt ply 7a is a thickness T of the belt ply 7a in the tire radial direction at the tire equator C in the normal state, and can be obtained, for example, by a computer tomography method using X-rays. The thickness T of the belt ply 7a may be measured, for example, in a simplified manner with the bead portions 4 in a cross-section portion cut out from a part of the tire 1 along a tire meridian, being matched with the width of the normal rim.

In a cross-section orthogonal to the longitudinal direction of the belt cords 8, a cross-sectional area S1 of the belt cord 8 within the belt ply 7a is preferably not greater than 30%, more preferably not greater than 29%, and further preferably not greater than 28%, of a cross-sectional area S2 of the belt ply 7a.

As for the lower limit of the cross-sectional area S1 of the belt cord 8 with respect to the cross-sectional area S2 of the belt ply 7a, the cross-sectional area S1 is preferably not less than 20%, more preferably not less than 22%, and further preferably not less than 23%. Such a belt ply 7a can increase the in-plane stiffness and suppress occurrence of belt looseness, so that the durability of the tire 1 can be improved and the ride comfort of the tire 1 can also be improved.

Here, the cross-sectional area S2 of the belt ply 7a is obtained as the product (L2×T) of the inter-center distance L2 between the belt cords 8 and the thickness T of the belt ply 7a. In addition, the cross-sectional area S1 of the belt cord 8 is obtained as the average of the cross-sectional areas S1 of the five belt cords 8 on each of both sides in the tire axial direction of the tire equator C. The cross-sectional area S1 in the case where the belt cord 8 is present on the tire equator C is preferably obtained as the average of the cross-sectional areas S1 of a total of eleven belt cords 8 including the belt cord 8 on the tire equator C and the five belt cords 8 on each of both sides.

The long diameter D1 of the belt cord 8 is preferably not less than 1.10 mm, more preferably not less than 1.12 mm, and further preferably not less than 1.14 mm. In addition, the long diameter D1 of the belt cord 8 is preferably not greater than 1.80 mm, more preferably not greater than 1.70 mm, and further preferably not greater than 1.50 mm.

The short diameter D2 of the belt cord 8 is preferably not less than 0.90 mm, more preferably not less than 0.94 mm, and further preferably not less than 0.97 mm. In addition, the short diameter D2 of the belt cord 8 is preferably not greater than 1.20 mm, more preferably not greater than 1.10 mm, and further preferably not greater than 1.00 mm. It should be noted that the short diameter D2 of the belt cord 8 is less than the long diameter D1 of the belt cord 8.

Such a belt cord 8 can provide followability to a road surface while maintaining the stiffness in the width direction of the belt ply 7a, and serves to improve the combined performance of the ride comfort and the durability of the tire 1.

The belt cords 8 are preferably arranged in the belt ply 7a such that the long diameter directions thereof form the same plane. Such a belt ply 7a can reduce the stiffness in the thickness direction while maintaining the stiffness in the width direction, so that the combined performance of the ride comfort and the durability of the tire 1 can be improved. Here, the long diameter directions thereof forming the same plane means that the relative angles of the long diameter directions are within 10°.

As shown in FIG. 3 and FIG. 4, the flatness ratio d2/d1 of the core 10 is preferably not greater than 70%, more preferably not greater than 68%, and further preferably not greater than 65%. Such a core 10 reliably allows the belt cord 8 to be formed in a flattened shape, and serves to improve followability to a road surface while maintaining the stiffness in the width direction of the belt ply 7a. The lower limit of the flatness ratio d2/d1 of the core 10 is not particularly limited, but the flatness ratio d2/d1 of the core 10 is preferably not less than 30%, more preferably not less than 45%, and further preferably not less than 55%.

The long diameter d1 of the core 10 is preferably not less than 0.30 mm, more preferably not less than 0.35 mm, and further preferably not less than 0.38 mm. In addition, the long diameter d1 of the core 10 is preferably not greater than 0.50 mm, more preferably not greater than 0.45 mm, and further preferably not greater than 0.43 mm.

The short diameter d2 of the core 10 is preferably not less than 0.15 mm, more preferably not less than 0.20 mm, and further preferably not less than 0.22 mm. In addition, the short diameter d2 of the core 10 is preferably not greater than 0.42 mm, more preferably not greater than 0.40 mm, and further preferably not greater than 0.38 mm. It should be noted that the short diameter d2 of the core 10 is less than the long diameter d1 of the core 10.

Such a core 10 achieves both stiffness in the long diameter direction and flexibility in the short diameter direction of the belt cord 8, and serves to improve the combined performance of the ride comfort and the durability of the tire 1.

As shown in FIG. 4, each corner portion of the substantially rectangular cross-section of the core 10 is formed, for example, in an arc shape. A radius r of the arc shape of each corner portion of the core 10 is preferably not less than 0.07 mm. In addition, the radius r of the arc shape of each corner portion of the core 10 is preferably not greater than 0.15 mm. Such a core 10 has no risk of damaging the sheaths 11, so that the durability of the tire 1 can be improved.

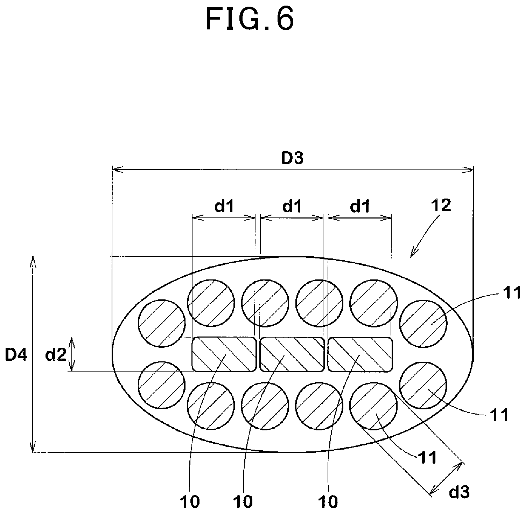

FIG. 6 is a schematic cross-sectional view of a belt cord 12 of another embodiment of the invention. The belt cord 12 in FIG. 6 has a 3 + 12 structure including three cores 10 and twelve sheaths 11. As shown in FIG. 3 and FIG. 6, the belt cords 8 and 12 each preferably include an untwisted core(s) 10 composed of one to three single steel wires. FIG. 3 shows a configuration including one core 10, and FIG. 6 shows a configuration including three cores 10. Such belt cords 8 and 12 serve to improve followability to a road surface while maintaining moderate stiffness.

The belt cords 8 and 12 each preferably include five to twelve sheaths 11 each having a circular cross-sectional shape. FIG. 3 shows a configuration including eight sheaths 11, and FIG. 6 shows a configuration including twelve sheaths 11. Such belt cords 8 and 12 can cause stretch while maintaining moderate stiffness, and serve to improve the durability of the tire 1. Here, the circular cross-sectional shape means that a cross-sectional shape orthogonal to the longitudinal direction of the sheath 11 is a circular shape, and refers to a shape having a flatness ratio of not greater than 1.05.

A diameter d3 of each sheath 11 of the present embodiment of the invention is smaller than the long diameter d1 of the core 10. The diameter d3 of each sheath 11 is preferably equal to the short diameter d2 of the core 10 or larger than the short diameter d2. Such a sheath 11 serves to achieve both the stiffness and stretch of the belt cord 8 or 12.

The diameter d3 of each sheath 11 is preferably 0.30 to 0.37 mm. When the diameter d3 of each sheath 11 is not less than 0.30 mm, good stiffness of the belt cord 8 or 12 can be maintained. When the diameter d3 of each sheath 11 is not greater than 0.37 mm, good stretch of the belt cord 8 or 12 can be maintained.

In each of the belt cords 8 and 12, the sheaths 11 are preferably twisted helically around the core(s) 10. The twisting pitch of the sheaths 11 is not particularly limited, but is preferably not less than the product of the diameter d3 of the sheath 11 and the number of the sheaths 11. The twisting pitch of the sheaths 11 is more preferably 1.05 to 4.00 times the product of the diameter d3 of the sheath 11 and the number of the sheaths 11.

In the case where a plurality of cores 10 are included as shown in FIG. 6, the cores 10 are preferably arranged such that the long diameter directions thereof form the same plane. Such cores 10 reliably allow the belt cord 12 to be formed in a flattened shape, and serve to reduce the weight of the belt ply 7a while maintaining the stiffness in the width direction of the belt ply 7a.

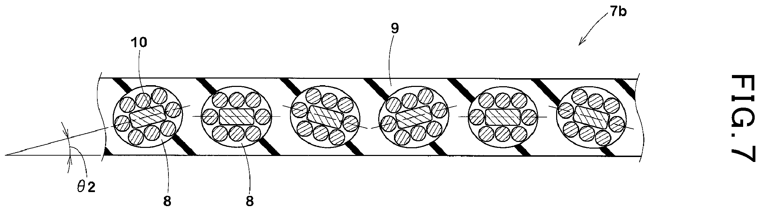

FIG. 7 is a schematic cross-sectional view of a belt ply 7b of another embodiment of the invention. As shown in FIG. 7, in a cross-section orthogonal to the longitudinal direction of the belt cords 8, in the belt ply 7b, for example, the cores 10 may be arranged such that the long diameter direction of the core 10 has an angle θ2 with respect to the width direction of the belt ply 7b. In this case, the long diameter directions of the cores 10 are preferably directed at an angle of 30° or less with respect to the width direction of the belt ply 7b.

Such a belt ply 7b can exhibit the same effect as one in which the longitudinal directions of the belt cords 8 are directed so as to form the same plane, and the production process can be simplified, so that the production cost can be reduced.

EXAMPLES

Tires (11R22.5 14PR) having the basic structure shown in FIG. 1 were produced as test tires based on specifications in Table 1 and Table 2. Using the produced test tires, ride comfort and durability were tested, and the combined performance thereof was evaluated. The production and test methods are as follows.

<Production Method for Test Tires>

First, each blending material shown below was prepared, and mixed with a 270-L Banbury mixer to obtain a covering layer rubber composition.

(Blending Material)

    (a) Rubber component: natural rubber : 100 parts by mass
    (b) Blending Material Other Than Rubber Component

        (i) Carbon black: SHOBLACK N326 manufactured by Cabot Japan K.K. : 40 parts by mass
        (ii) Carbon black: SHOBLACK N550 manufactured by Cabot Japan K.K. : 15 parts by mass
        (iii) Curable resin component: SUMIKANOL 620 manufactured by Taoka Chemical Co., Ltd. : 5 parts by mass
        (iv) Resin curing agent: SUMIKANOL 507 manufactured by Taoka Chemical Co., Ltd. : 1.5 parts by mass
        (v) Organic acid cobalt salt: DICNATE NBC-2 manufactured by DIC Corporation : 1 part by mass
        (vi) Antioxidant: NOCRAC 6C manufactured by Ouchi Shinko Chemical Industrial Co., Ltd. : 0.5 parts by mass
        (vii) Antioxidant: ANTAGE RD manufactured by Kawaguchi Chemical Industry Co., Ltd. : 1 part by mass
        (viii) Zinc oxide: Zinc Oxide Type-1 manufactured by Mitsui Mining & Smelting Co., Ltd. : 10 parts by mass
        (ix) Sulfur: powdery sulfur manufactured by Tsurumi Chemical Industry Co., Ltd. : 7 parts by mass
        (x) Vulcanization accelerator: NOCCELER DZ manufactured by Ouchi Shinko Chemical Industrial Co., Ltd. : 1.2 parts by mass
        (xi) Crosslinking agent: DURALINK HTS manufactured by Flexsys : 1.5 parts by mass

Next, belt cords shown in Table 1 and Table 2 were prepared, the prepared belt cords were arranged so as to have inter-center distances L2 between the belt cords shown in Table 1 and Table 2, and covering layers were press-bonded to the belt cords from above and below to obtain belt plies.

The obtained belt plies were shaped together with inner liners, carcass plies, sidewall rubbers, bead apexes, bead cores, chafer rubbers, tread rubbers, etc., to obtain unvulcanized tires. The obtained unvulcanized tires were vulcanized at 160°C for 40 minutes to obtain test tires. In each of the produced test tires, the shortest distance L1 between the ground-contact surface of the tread portion and the belt cord center was adjusted by changing the thickness of the tread rubber.

Moreover, in addition to the test tires used for the tests, confirmation tires were produced with the same specifications as those of the test tires. Destructive inspection was performed on the confirmation tires, and the dimensions of each component of the test tires were confirmed from a tire meridian cross-section, a cross-section orthogonal to the longitudinal direction of the belt cords, and the arrangement state of the belt cords when the tread portion was peeled off.

<Ride Comfort>

The produced test tires were mounted to all the wheels of test vehicles that were large trucks, and ride comfort when each vehicle was caused to run on a test course having a paved road including straight, curved, and meandering sections was evaluated on a 5 point scale with 5 being the maximum score through sensory evaluation by the test driver. The same test was made by 20 test drivers, and the total of scores by the test drivers was calculated. The results are represented as indexes with the total score of Comparative Example 1 being regarded as 100. A higher value indicates that the ride comfort is better.

<Durability>

The produced test tires were fitted onto normal rims, adjusted to a normal internal pressure at an oxygen concentration of 90%, and thermally deteriorated in an oven at 70°C for 6 weeks. Then, each of the thermally deteriorated tires was mounted on a drum tester, and was caused to run based on the test conditions of the load/speed endurance test of the technical inspection standards and conformity inspection of the Ministry of Land, Infrastructure, Transport and Tourism until swelling occurred in the tread portion, and the running time was measured. The results are represented as indexes with the result of Comparative Example 1 being regarded as 100. A higher value indicates that the running time is longer and the durability is better.

<Combined Performance>

Combined performance of ride comfort and durability was evaluated based on the evaluation results of ride comfort and the evaluation results of durability. The results are represented as the sum of the index of ride comfort and the index of durability. A higher value indicates that the combined performance of ride comfort and durability is better.
The results of the tests are shown in Table 1 and Table 2.

[Table 1]

| | Comp. Ex. 1 | Comp. Ex. 2 | Comp. Ex. 3 | Comp. Ex. 4 | Comp. Ex. 5 | Ex. 1 | Ex. 2 |
|---|---|---|---|---|---|---|---|
| Belt cord structure | 1×3+6 | 1×2+7 | 1+8 | 1+8 | 1+8 | 1+8 | 2+7 |
| Number of cores | 3 | 2 | 1 | 1 | 1 | 1 | 2 |
| Number of sheaths | 6 | 7 | 8 | 8 | 8 | 8 | 7 |
| Core long diameter d1 (mm) | 0.20 | 0.37 | 0.35 | 0.50 | 0.45 | 0.45 | 0.45 |
| Core short diameter d2 (mm) | 0.20 | 0.37 | 0.35 | 0.45 | 0.30 | 0.30 | 0.30 |
| Sheath diameter d3 (mm) | 0.35 | 0.37 | 0.35 | 0.35 | 0.35 | 0.35 | 0.37 |
| Belt cord long diameter D1 (mm) | 1.10 | 1.42 | 1.05 | 1.20 | 1.15 | 1.15 | 1.64 |
| Belt cord short diameter D2 (mm) | 1.10 | 1.42 | 1.05 | 1.15 | 1.00 | 1.00 | 1.04 |
| Belt cord angle θ1 (°) | 35 | 35 | 35 | 35 | 35 | 35 | 35 |
| Shortest distance L1 between ground-contact surface and belt cord center (mm) | 10 | 10 | 10 | 10 | 8 | 10 | 10 |
| Inter-center distance L2 between belt cords (mm) | 1.92 | 1.92 | 1.92 | 1.92 | 1.92 | 1.92 | 1.92 |
| Inter-center distance L2' between belt cords (mm) | 2.35 | 2.35 | 2.35 | 2.35 | 2.35 | 2.35 | 2.35 |
| Belt ply thickness T (mm) | 1.75 | 2.07 | 1.70 | 1.65 | 1.65 | 1.65 | 1.69 |
| Core maximum tilt angle θ2 (°) | 0 | 0 | 0 | 10 | 10 | 35 | 35 |
| Core flatness ratio d2/d1 (%) | 100 | 100 | 100 | 90 | 67 | 67 | 67 |
| Value d2/d1/L1 (1/mm) | 0.100 | 0.100 | 0.100 | 0.090 | 0.083 | 0.067 | 0.067 |
| Value L2/D1 (%) | 175 | 135 | 183 | 160 | 167 | 167 | 117 |
| Value T/D2 (%) | 159 | 146 | 162 | 143 | 165 | 165 | 163 |
| Cross-sectional area ratio S1/S2 (%) | 20 | 24 | 26 | 31 | 29 | 29 | 31 |

(continued)

| | Comp. Ex. 1 | Comp. Ex. 2 | Comp. Ex. 3 | Comp. Ex. 4 | Comp. Ex. 5 | Ex. 1 | Ex. 2 |
|---|---|---|---|---|---|---|---|
| Ride comfort (index) | 100 | 96 | 95 | 98 | 100 | 108 | 106 |
| Durability (index) | 100 | 98 | 95 | 100 | 96 | 108 | 110 |
| Combined performance (total value) | 200 | 194 | 190 | 198 | 196 | 216 | 216 |

[Table 2]

| | Ex. 3 | Ex. 4 | Ex. 5 | Ex. 6 | Ex. 7 | Ex. 8 |
|---|---|---|---|---|---|---|
| Belt cord structure | 3+9 | 1+8 | 1+8 | 1+8 | 1+8 | 1+8 |
| Number of cores | 3 | 1 | 1 | 1 | 1 | 1 |
| Number of sheaths | 9 | 8 | 8 | 8 | 8 | 8 |
| Core long diameter d1 (mm) | 0.40 | 0.45 | 0.40 | 0.45 | 0.45 | 0.45 |
| Core short diameter d2 (mm) | 0.25 | 0.30 | 0.25 | 0.30 | 0.30 | 0.30 |
| Sheath diameter d3 (mm) | 0.30 | 0.35 | 0.35 | 0.35 | 0.35 | 0.35 |
| Belt cord long diameter D1 (mm) | 1.80 | 1.15 | 1.10 | 1.15 | 1.15 | 1.15 |
| Belt cord short diameter D2 (mm) | 0.85 | 1.00 | 0.95 | 1.00 | 1.00 | 1.00 |
| Belt cord angle $\theta 1$ (°) | 35 | 35 | 35 | 45 | 28 | 35 |
| Shortest distance L1 between ground-contact surface and belt cord center (mm) | 10 | 14 | 14 | 10 | 10 | 10 |
| Inter-center distance L2 between belt cords (mm) | 1.92 | 1.92 | 1.92 | 1.92 | 1.92 | 1.92 |
| Inter-center distance L2' between belt cords (mm) | 2.35 | 2.35 | 2.35 | 2.72 | 2.18 | 2.35 |
| Belt ply thickness T (mm) | 1.50 | 1.65 | 1.65 | 1.65 | 1.65 | 2.20 |
| Core maximum tilt angle $\theta 2$ (°) | 35 | 35 | 35 | 35 | 28 | 35 |
| Core flatness ratio d2/d1 (%) | 63 | 67 | 63 | 67 | 67 | 67 |
| Value d2/d1/L1 (1/mm) | 0.063 | 0.048 | 0.045 | 0.067 | 0.067 | 0.067 |
| Value L2/D1 (%) | 107 | 167 | 175 | 167 | 167 | 167 |
| Value T/D2 (%) | 176 | 165 | 174 | 165 | 165 | 220 |
| Cross-sectional area ratio S1/S2 (%) | 32 | 29 | 27 | 29 | 29 | 21 |
| Ride comfort (index) | 112 | 114 | 118 | 106 | 106 | 106 |
| Durability (index) | 108 | 118 | 122 | 104 | 112 | 102 |
| Combined performance (total value) | 220 | 232 | 240 | 210 | 218 | 208 |

As a result of the tests, the tires of Examples have better ride comfort and durability than those of Comparative Examples, and also has better combined performance determined as the sum of the respective performances than that of Comparative Examples, so that it is confirmed that the tires of Examples have improved combined performance of ride comfort and durability.

REFERENCE SIGNS LIST

1. Tire

2. Tread portion
2a. Ground-contact surface
3. Sidewall portions
4. Bead portions
5. Bead cores
6. Carcass
7. Belt layer
7A,7B,7C,7D,7a,7b. Belt ply
8. Belt cords
9. Covering layer
10. Core
11. Sheaths
12. Belt cords

**Claims**

1. A tire (1) comprising a belt layer (7), wherein

the belt layer (7) includes at least one belt ply (7A, 7B, 7C, 7D, 7a, 7b) in which belt cords (8) are arranged,
the belt cords (8, 12) each have an N + M structure including N core(s) (10) and M sheaths (11), and
each core (10) has a cross-section having a flattened shape having a long diameter d1 and a short diameter d2,
**characterized in that**
a value (d2/dl/Ll) obtained by dividing a flatness ratio d2/dl of the core (10) by a shortest distance L1 (mm) in a tire radial direction from a ground-contact surface (2a) of a tread portion (2) to a center of the belt cord (8, 12) in a tire meridian cross-section is not greater than 0.07 (1/mm).

2. The tire (1) according to claim 1, wherein the flatness ratio d2/dl of the core (10) is not greater than 70%.

3. The tire (1) according to claim 1 or 2, wherein the short diameter d2 of the core (10) is 0.15 to 0.42 mm.

4. The tire (1) according to any one of claims 1 to 3, wherein the belt cords (8, 12) each include the untwisted core (10) composed of one to three single steel wires.

5. The tire (1) according to any one of claims 1 to 4, wherein the belt cords (8, 12) each include five to twelve of the sheaths (11) each having a circular cross-sectional shape.

6. The tire (1) according to any one of claims 1 to 5, wherein the belt layer (7) includes two or more of the belt plies (7a) adjacent to each other in the tire radial direction.

7. The tire (1) according to any one of claims 1 to 6, wherein a thickness T of the belt ply (7a) is 160% to 200% of a short diameter D2 of the belt cord (8).

8. The tire (1) according to any one of claims 1 to 7, wherein, in a cross-section orthogonal to a longitudinal direction of the belt cords (8), an inter-center distance L2 between a pair of the belt cords (8) adjacent to each other in a width direction of the belt ply (7a) is not greater than 170% of a long diameter D1 of the belt cord (8).

9. The tire (1) according to any one of claims 1 to 8, wherein, in a cross-section orthogonal to the longitudinal direction of the belt cords (8), a cross-sectional area (S1) of the belt cord (8) is 20% to 30% of a cross-sectional area (S2) of the belt ply (7a).

10. The tire (1) according to any one of claims 1 to 9, wherein, in a cross-section orthogonal to the longitudinal direction of the belt cords (8), a long diameter direction of each core (10) is directed at an angle of 30° or less with respect to the width direction of the belt ply (7b).

**Patentansprüche**

1. Reifen (1) mit einer Karkassenschicht (7), wobei
die Karkassenschicht (7) mindestens eine Karkassenlage (7A, 7B, 7C, 7D, 7a, 7b) hat, in der Karkassenkorde (8) angeordnet sind,

die Karkassenkorde (8, 12) jeweils eine N+M-Struktur mit N Kern(en) (10) und M Hüllen (11) aufweisen, und jeder Kern (10) einen Querschnitt mit einer abgeflachten Form mit einem langen Durchmesser d1 und einem kurzen Durchmesser d2 aufweist,
**dadurch gekennzeichnet, dass**
ein Wert (d2/d1/L1), der durch Dividieren eines Flachheitsverhältnisses d2/d1 des Kerns (10) durch einen kürzesten Abstand L1 (mm) in einer radialen Richtung des Reifens von einer Berührungsoberfläche (2a) eines Abschnitts der Lauffläche (2) zu einem Mittelpunkt des Karkassenkords (8, 12) in einem meridianen Querschnitt des Reifens erhalten wird, nicht größer als 0,07 (1/mm) ist.

2. Reifen (1) gemäß Anspruch 1, wobei das Flachheitsverhältnis d2/d1 des Kerns (10) nicht größer als 70 % ist.

3. Reifen (1) gemäß Anspruch 1 oder 2, wobei der kurze Durchmesser d2 des Kerns (10) 0,15 bis 0,42 mm beträgt.

4. Reifen (1) gemäß einem der Ansprüche 1 bis 3, wobei die Karkassenkorde (8, 12) jeweils den ungedrehten Kern (10) haben, der aus einem bis drei einzelnen Stahldrähten besteht.

5. Reifen (1) gemäß einem der Ansprüche 1 bis 4, wobei die Karkassenkorde (8, 12) jeweils fünf bis zwölf der Ummantelungen (11) haben, die jeweils eine kreisförmige Querschnittsform aufweisen.

6. Reifen (1) gemäß einem der Ansprüche 1 bis 5, wobei die Gürtelschicht (7) zwei oder mehr der Gürtellagen (7a) hat, die in radialer Richtung des Reifens aneinander angrenzen.

7. Reifen (1) gemäß einem der Ansprüche 1 bis 6, wobei eine Dicke T der Gürtellage (7a) 160 % bis 200 % eines kurzen Durchmessers D2 des Karkassenkords (8) beträgt.

8. Reifen (1) gemäß einem der Ansprüche 1 bis 7, wobei in einem Querschnitt senkrecht zu einer Längsrichtung der Karkassenkorde (8) ein Abstand L2 zwischen den Mittelpunkten eines Paars von Karkassenkorden (8), die in einer Breitenrichtung der Karkassenlage (7a) benachbart sind, nicht größer als 170 % eines langen Durchmessers D1 des Karkassenkords (8) ist.

9. Reifen (1) gemäß einem der Ansprüche 1 bis 8, wobei in einem Querschnitt senkrecht zur Längsrichtung der Karkassenkorde (8) eine Querschnittsfläche (S1) des Karkassenkords (8) 20 % bis 30 % einer Querschnittsfläche (S2) der Karkassenlage (7a) beträgt.

10. Reifen (1) gemäß einem der Ansprüche 1 bis 9, wobei in einem Querschnitt senkrecht zur Längsrichtung der Karkassenkorde (8) eine Richtung des langen Durchmessers jedes Kerns (10) in einem Winkel von 30° oder weniger mit Bezug auf die Breitenrichtung der Gürtellage (7b) ausgerichtet ist.

**Revendications**

1. Pneu (1) comprenant une couche de ceinture (7), dans lequel

la couche de ceinture (7) comporte au moins une nappe de ceinture (7A, 7B, 7C, 7D, 7a, 7b) dans laquelle sont disposées des câbles de ceinture (8),
les câbles de ceinture (8, 12) ont chacune une structure N + M comportant N âme(s) (10) et M gaines (11), et chaque âme (10) présente une section transversale de forme aplatie ayant un diamètre long d1 et un diamètre court d2,
**caractérisé en ce que**
une valeur (d2/d1/L1) obtenue en divisant un rapport de planéité d2/d1 de l'âme (10) par une distance la plus courte L1 (mm) dans une direction radiale du pneu à partir d'une surface de contact avec le sol (2a) d'une partie de la bande de roulement (2) jusqu'à un centre du câble de ceinture (8, 12) dans une section transversale méridienne du pneu n'est pas supérieure à 0,07 (1/mm).

2.  Pneu (1) selon la revendication 1, dans lequel le rapport de planéité d2/d1 de l'âme (10) n'est pas supérieur à 70 %.

3.  Pneu (1) selon la revendication 1 ou 2, dans lequel le diamètre court d2 de l'âme (10) est compris entre 0,15 et 0,42 mm.

4.  Pneu (1) selon l'une des revendications 1 à 3, dans lequel les câbles de ceinture (8, 12) comprennent chacun l'âme non torsadée (10) composée d'un à trois fils simples en acier.

5.  Pneu (1) selon l'une des revendications 1 à 4, dans lequel les câbles de ceinture (8, 12) comportent chacun cinq à douze des gaines (11) ayant chacune une forme de section transversale circulaire.

6.  Pneu (1) selon l'une quelconque des revendications 1 à 5, dans lequel la couche de ceinture (7) comporte deux ou plusieurs des nappes de ceinture (7a) adjacentes les unes aux autres dans la direction radiale du pneu.

7.  Pneu (1) selon l'une quelconque des revendications 1 à 6, dans lequel une épaisseur T de la nappe de ceinture (7a) est comprise entre 160 % et 200 % d'un diamètre court D2 du câble de ceinture (8).

8.  Pneu (1) selon l'une quelconque des revendications 1 à 7, dans lequel, dans une section transversale orthogonale à une direction longitudinale des câbles de ceinture (8), une distance inter-centres L2 entre une paire de câbles de ceinture (8) adjacents l'un à l'autre dans une direction de largeur de la nappe de ceinture (7a) n'est pas supérieure à 170 % d'un long diamètre D1 du câble de ceinture (8).

9.  Pneu (1) selon l'une quelconque des revendications 1 à 8, dans lequel, dans une section transversale orthogonale à la direction longitudinale des cordes de ceinture (8), une surface de section transversale (S1) du câble de ceinture (8) est de 20 % à 30 % d'une surface de section transversale (S2) de la nappe de ceinture (7a).

10. Pneu (1) selon l'une quelconque des revendications 1 à 9, dans lequel, dans une section transversale orthogonale à la direction longitudinale des câbles de ceinture (8), une direction de long diamètre de chaque noyau (10) est dirigée à un angle de 30° ou moins par rapport à la direction de la largeur de la nappe de ceinture (7b).

# FIG. 1

# FIG. 2

# FIG. 3

# FIG.4

# FIG.5

# FIG. 6

# FIG.7

**EP 4 201 702 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3276612 B

- JP 2015171864 A